# EUROPEAN PATENT SPECIFICATION

(11) **EP 4 080 054 B1**
(45) Date of publication and mention of the grant of the patent: **03.04.2024**
(21) Application number: 22169034.0
(22) Date of filing: 20.04.2022
(51) Int. Cl.: F04B 49/03, F04B 53/10, F04B 39/10, F04B 39/00

(54) **AIR STOP SHEET OF PISTON OF CYLINDER**
LUFTSTOPPSCHICHT EINES KOLBENS EINES ZYLINDERS
FEUILLE D'ARRÊT D'AIR DE PISTON DE CYLINDRE

(30) Priority: 22.04.2021 TW 110114606
(43) Date of publication of application: 26.10.2022
(73) Proprietor: Chou, Wen-San, Tainan City (TW); Chou, Cheng-Hsien, Tainan City (TW)
(72) Inventor: Chou, Wen-San, Tainan City (TW); Chou, Cheng-Hsien, Tainan City (TW)
(74) Representative: Becker Kurig & Partner Patentanwälte mbB

(56) References cited:
- WO-A1-2017/173715
- FR-A1- 2 216 462
- KR-A- 20050 017 240
- US-A- 4 642 037

## Description

### FIELD OF THE INVENTION

The present invention relates to an air compressor, and more particularly to the air compressor which includes an air stop sheet and a piston moving upward and downward in a cylinder of an air compressor.

### BACKGROUND OF THE INVENTION

A conventional air compressor contains: a motor, a piston driven by the motor to move reciprocately in a cylinder, such that airs are compressed to produce compressed airs, and the compressed airs are delivered to a storage holder from the cylinder, thereafter the compressed airs are inflated into a deflated object via an output tube of the storage holder via a delivery hose connected with the output tube. The piston includes a conduit communicating with a head thereof, an air stop sheet covered on the conduit of a plane of a top of the piston. When the air compressor stops, the air stop sheet closes the conduit of the head of the piston. After the air compressor operates again, airtightness produces among an airtight ring and the air stop sheet of the head of the piston and the air stop sheet, so the compressed airs cannot be discharged out of the cylinder completely. After starting the air compressor once more, the piston hit the compressed airs in the cylinder to increase loading and electric currents of the air compressor, thus reducing a service life of the air compressor.

Document US 4 642 037 A describes a suction valve for a small refrigeration compressor, which is in the form of a thin sheet metal reed having a sealing portion adapted to make sealing contact with a valve seat around the suction port on a valve plate. Document FR 2 216 462 A1 provides a leaf spring valve for pumps and compressors, wherein the leaf spring has defined areas serving as a closing surface, as a flexible surface and as a retaining surface.

The present invention has arisen to mitigate and/or obviate the afore-described disadvantages.

### SUMMARY OF THE INVENTION

The invention is defined by the appended claims.

The primary aspect of the present invention is to provide an air stop sheet of a piston of a cylinder by which when the piston of the air compressor stops, the acting zone of the air stop sheet turns on relative to the air channel and the air conduit, and the air channel of the piston is communicated smoothly so that a pressure of the cylinder balances with atmosphere, and the piston is not stopped by an additional resistance (i.e. a back-pressure resistance) in the upward moving stroke after the air compressor is opened again, thus enhancing using safety and service life and inflating the compressed airs into the deflated object easily.

Further aspect of the present invention is to provide an air stop sheet of a piston of a cylinder by which when the piston of the air compressor stops, the acting zone of the air stop sheet turns on relative to the plane of the top of the head.

Another aspect of the present invention is to provide an air stop sheet of a piston of a cylinder by which the head includes the two separated bolts, and the positioning zone of the air stop sheet has two spaced orifices connecting with the two separated bolts of the head, thus fixing the air stop sheet on the head.

To obtain above-mentioned aspect, an air stop sheet of a piston of a cylinder provided by the present invention contains at least one bending section. The bending section has a positioning zone arranged on a first side thereof and located on the plane of the top of the head, and the bending section further has an acting zone arranged on a second side thereof and configured to close an air channel of the piston. The bending section is a boundary line of the acting zone and the positioning zone of the air stop sheet so that a positive surface of the air stop sheet forms an obtuse angle less than 180 degrees, and a back surface of the acting zone of the air stop sheet backing the top of the cylinder turns on relative to the plane of the top of the head at an open angle *θ*, thus producing an air flowing space.

Another aspect of the present invention is to provide a piston of an air compressor which contains the bending section of the air stop sheet having at least one collapsible guideline, and a number of the at least one collapsible guideline are determined based on an output power of the air compressor.

### BRIEF DESCRIPTION OF THE DRAWINGS

FIG. 1 is a perspective view showing the exploded components of a piston of an air compressor and an air stop sheet according to a preferred embodiment of the present invention.
FIG. 2 is a perspective view showing the assembly of the piston of the air compressor and the air stop sheet according to the preferred embodiment of the present invention.
FIG. 3 is a cross sectional view showing the operation of the piston of the air compressor according to the preferred embodiment of the present invention.
FIG. 4 is an amplified cross sectional view showing the assembly of a part of the piston of the air compressor according to the preferred embodiment of the present invention.
FIG. 5 is an amplified cross sectional view showing the operation of the piston of the air compressor according to the preferred embodiment of the present invention.
FIG. 6 is a perspective view showing the exploded components of the air compressor according to the preferred embodiment of the present invention.
FIG. 7 is a perspective view showing the exploded components of a piston of an air compressor according to another preferred embodiment of the present invention.
FIG. 8 is a cross sectional view showing the assembly of the piston of the air compressor according to another preferred embodiment of the present invention.
FIG. 9 is an amplified cross sectional view showing the assembly of a part of the piston of the air compressor according to another preferred embodiment of the present invention.

### DETAILED DESCRIPTION OF THE PREFERRED EMBODIMENTS

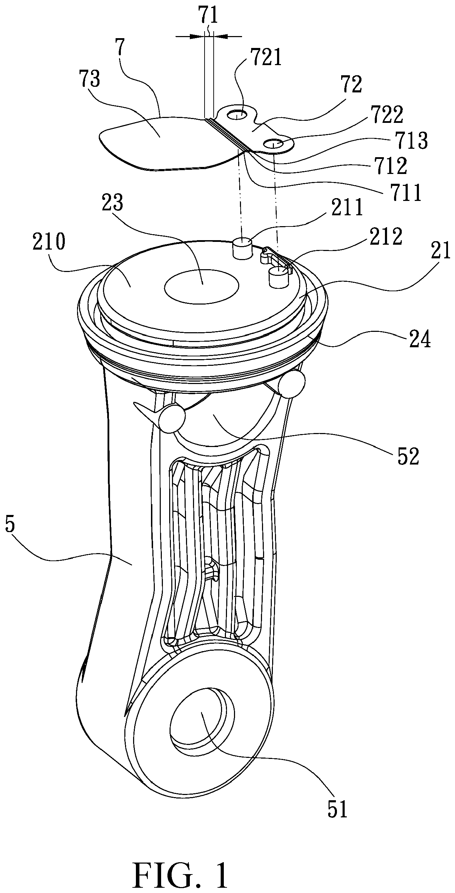

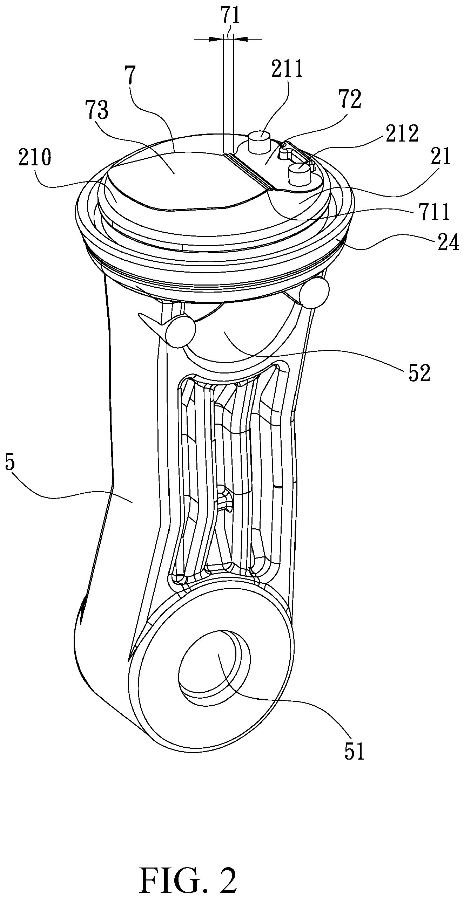

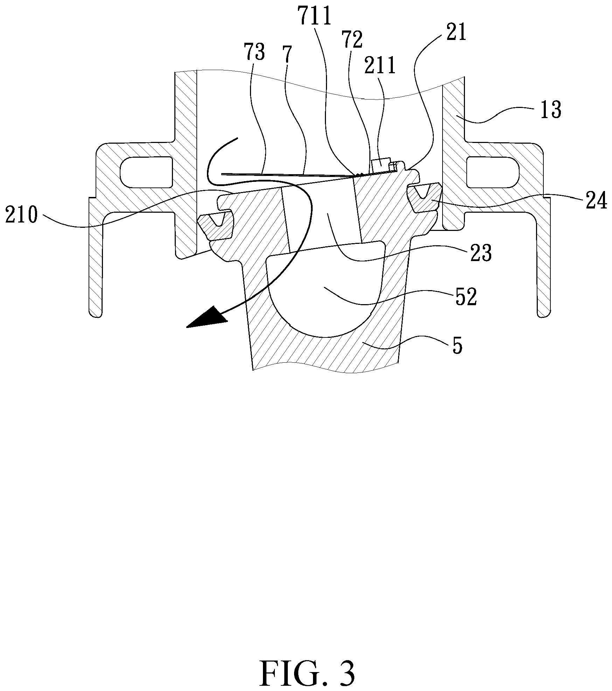

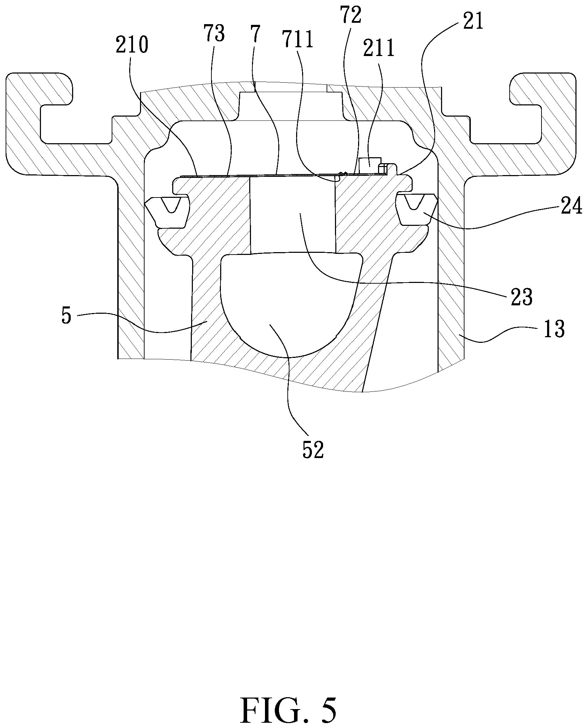

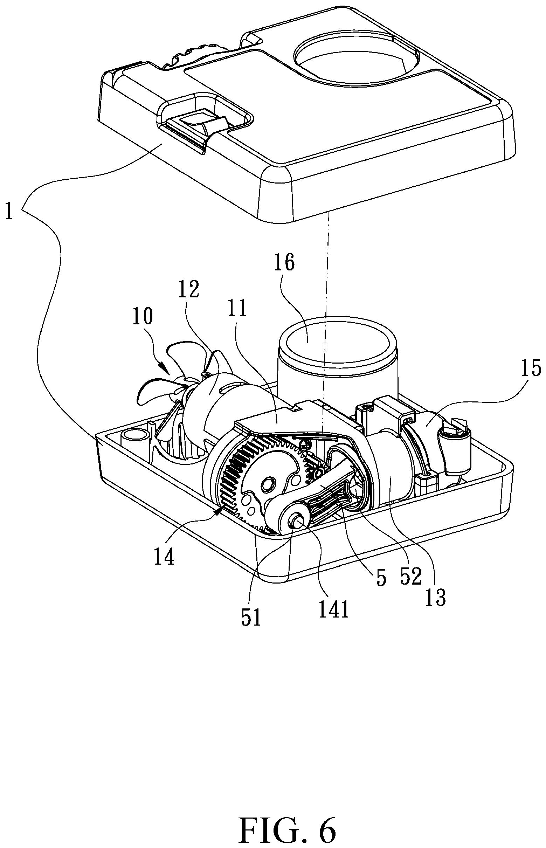

With reference to FIG. 6, an air compressor 10 according to a preferred embodiment of the present invention is received in an accommodation chamber, a box 1 or other a work place. In this embodiment, as shown in FIG. 6, the box 1 receives the air compressor 10 configured to inflate airs or to connect with a sealant supply (not shown), thus inflating the airs and supplying sealant. The air compressor 10 includes a substrate 11 configured to fix a motor 12, a cylinder 13 connected on the substrate 11, a transmission mechanism 14 mounted on the substrate 11 and connected with a piston. Referring to FIGS. 1 to 5, the piston includes a head 21, a plane 210 formed a top of the head 21, a seal ring 24 mounted around an outer wall of the head 21 and configured to close the piston and the cylinder 13 when the air compressor operates, and an air channel 23 communicating with the head 21. A piston rod 5 extends downward from the head 21, and the piston rod 5 includes a circular orifice 51 defined on a bottom thereof and rotatably connected with a crankshaft 141 of the transmission mechanism 14. The piston rod 5 also includes an air conduit 52 defined on a top thereof and communicating with the air channel 23. When an output shaft of the motor 12 actuates the crankshaft 141 of the transmission mechanism 14 to rotate and the piston to move upward and downward in the cylinder 13, the airs are compressed to produce compressed airs, and the compressed airs flow into a storage holder 15 so as to be supplied into a pressure gauge 16 via a delivery pipe, thus displaying a pressure. Thereafter, the compressed airs are inflated into a deflated object (not shown) via an air hose. Alternatively, the compressed airs and sealant are supplied to a broken tire (not shown) via the air hose or a valve. Since it is well-known art, further remarks are omitted.

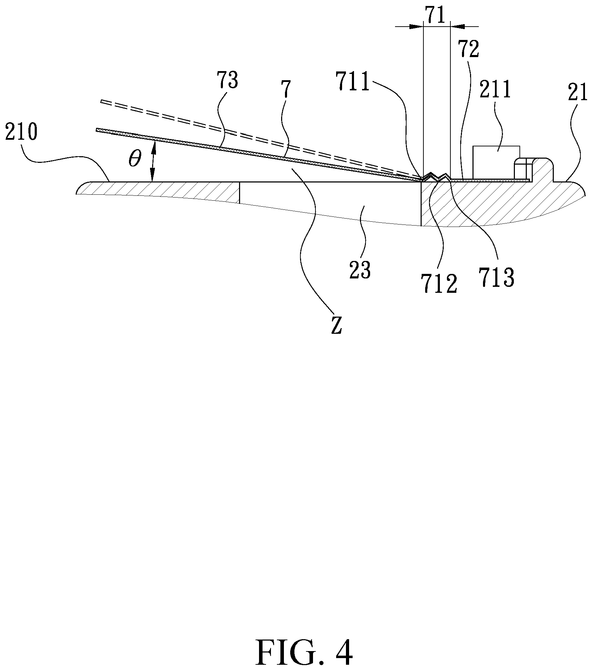

The head 21 of the piston of the air compressor 10 accommodates an air stop sheet 7, and the air stop sheet 7 includes a bending section 71, wherein the bending section 71 is formed in a mechanical working manner and has at least one collapsible guide line, for example, the bending section 71 has a first collapsible guide line 711, a second collapsible guide line 712, and a third collapsible guide line 713, as shown in FIG. 4, hence a number of the at least one collapsible guide line is determined based on an output power of the air compressor, and when an external pressure acts to the air stop sheet 7, the air stop sheet 7 opens and closes the piston by using the at least one collapsible guide line (track). The bending section 71 has a positioning zone 72 arranged on a first side thereof and located on the head 21, wherein the head 21 includes the two separated bolts 211, 212, and the positioning zone 72 of the air stop sheet 7 has two spaced orifices 721, 722 connecting with the two separated bolts 211, 212 of the head 21, thus fixing the air stop sheet 7 on the head 21. The bending section 71 further has an acting zone 73 arranged on a second side thereof and configured to close the air channel 23 of the piston. The bending section 71 is a boundary line of the acting zone 73 and the positioning zone 72 of the air stop sheet 7 so that a positive surface of the air stop sheet 7 (i.e. the air stop sheet 7 facing a top of the cylinder 13 in an upward moving stroke) forms an obtuse angle less than 180 degrees, and a back surface of the acting zone 73 of the air stop sheet 7 backing the top of the cylinder 13 turns on relative to the plane 210 of the top of the head 21 at an open angle *θ*, thus producing an air flowing space Z, such that when the piston of the air compressor 10 stops, the acting zone 73 of the air stop sheet 7 turns on relative to the air channel 23 and the air conduit 52, and the air channel 23 of the piston is communicated smoothly so that a pressure of the cylinder 13 balances with atmosphere, and the piston is not stopped by an additional resistance (i.e. a back-pressure resistance) in the upward moving stroke (as shown in 5) after the air compressor 10 is opened again, thus enhancing using safety and service life and inflating the compressed airs into the deflated object easily.

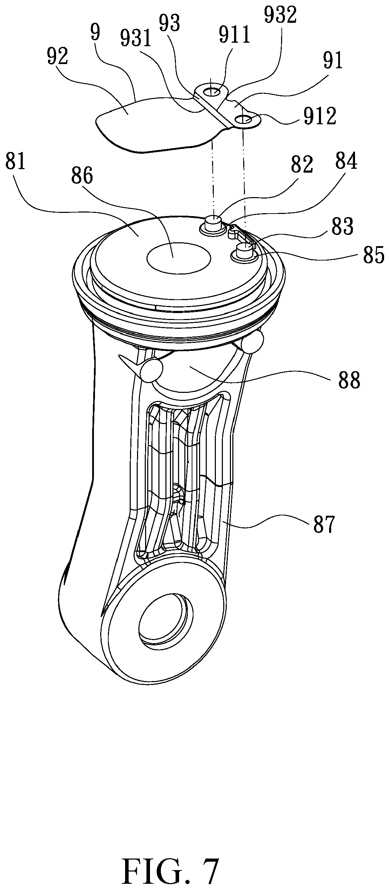

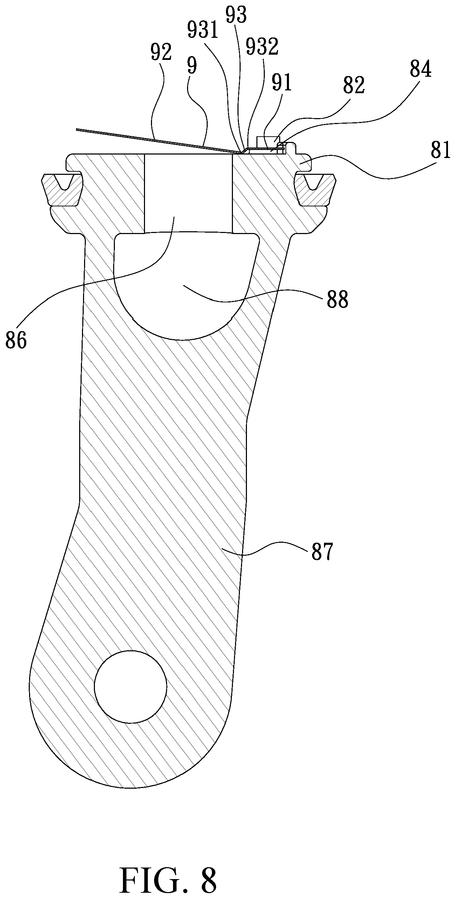

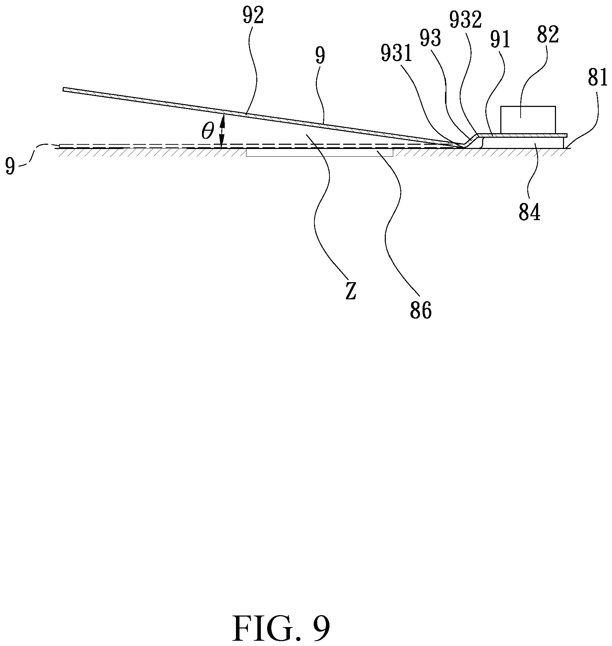

Preferably, a size and a hardness of the air stop sheet 7 are determined based on the output power of the air compressor. Referring to FIGS. 7-9, in another embodiment, to comply with a large output power of the air compressor, an amplitude of the air stop sheet has to be increased by forming a bending section 93 formed in a mechanical working manner, and the bending section 93 has a first collapsible guideline 931 and a second collapsible guide line 932. The air stop sheet 9 has a positioning zone 91 and an acting zone 92 with a height different from a height of the positioning zone 91, wherein the positioning zone 91 of the air stop sheet 9 has two spaced orifices 911, 912, and the two spaced orifices 911, 912 of the positioning zone 91 pass through two separated extensions 82, 83 of a plane of a top of the head 81 and are stopped by two spaced circular shoulders 84, 85. A piston rod 87 extends downward from the head 81, and the piston rod 87 includes an air conduit 88 defined on a top thereof and communicating with an air channel 86, such that when the air compressor operates in a large output power, the first collapsible guide line 931 abuts against a plane of a top of the head 81, and an open angle *θ* produces between the acting zone 92 of the air stop sheet 9 and the plane of the top of the head 81. Thereby, when the piston of the air compressor stops, the acting zone 92 of the air stop sheet 9 turns on relative to the air channel 86 of the piston, and the air channel 86 of the piston communicates with the air conduit 88 of the piston rod 87 so that a pressure of the cylinder 13 balances with atmosphere, and the piston is not stopped by an additional resistance (i.e. a back-pressure resistance) in the upward moving stroke after the air compressor 10 is opened again, hence the piston moves in the cylinder 13 smoothly to enhance using safety and service life and to inflate the compressed airs into the deflated object easily. Preferably, the air stop sheet 9 has the bending section 93 to be turned on/off, expanded, and retracted smoothly, thus enhancing the service life.

## Claims

1. An air stop sheet of a piston of a cylinder, the piston being accommodated in a compressor (10), and an air stop sheet (7) being accommodated on a plane (210) of a top of the head (21) of the piston, the air stop sheet (7) including a bending section (71), wherein
the bending section (71) has a positioning zone (72) arranged on a first side thereof and located on the plane (210) of the top of the head (21), and the bending section (71) further has an acting zone (73) arranged on a second side thereof and configured to close an air channel (23) of the piston, wherein the bending section (71) is a boundary line of the acting zone (73) and the positioning zone (72) of the air stop sheet (7) so that a positive surface of the air stop sheet (7) forms an obtuse angle less than 180 degrees, and a back surface of the acting zone (73) of the air stop sheet (7) backing the top of the cylinder (13) turns on relative to the plane (210) of the top of the head (21) at an open angle *θ*, thus producing an air flowing space (Z);
wherein a piston rod (5) extends downward from the head (21) and includes an air conduit (52) defined on a top of the piston rod (5) and communicating with the air channel (23), when the piston of the air compressor stops, the acting zone (73) of the air stop sheet (7) turns on relative to the air channel (23) and the air conduit (52),
wherein the bending section (71) of the air stop sheet (7) has at least one collapsible guide line, and a number of the at least one collapsible guide line (71) is determined based on an output power of the air compressor (10); **characterized in that**
the bending section (71) has a first collapsible guide line (711), a second collapsible guide line (712), and a third collapsible guide line (713), hence when the piston stops, the acting zone (73) of the air stop sheet (7) turns on relative to the plane (210) of the top of the head (21) at the open angle *θ*, or **characterized in that** the bending section (93) has a first collapsible guide line (931) and a second collapsible guide line (932), wherein the acting zone (92) has a height different from a height of the positioning zone (91).

2. The air stop sheet of the piston of the cylinder as claimed in claim 1, **characterized in that** the head (21) includes the two separated bolts (211), (212), and the positioning zone (72) of the air stop sheet (7) has two spaced orifices (721), (722) connecting with the two separated bolts (211), (212) of the head (21), thus fixing the air stop sheet (7) on the head (21);
wherein when the piston of the air compressor (10) stops, the acting zone (73) of the air stop sheet (7) turns on relative to the air channel (23).

3. The air stop sheet of the piston of the cylinder as claimed in claim 1, **characterized in that** the two spaced orifices (911), (912) of the positioning zone (91) pass through two separated extensions (82), (83) of a plane of a top of the head (81) and are stopped by two spaced circular shoulders (84), (85).

## Patentansprüche

1. Luftanschlagblech eines Kolbens eines Zylinders, wobei der Kolben in einem Kompressor (10) untergebracht ist, und ein Luftanschlagblech (7) auf einer Ebene (210) einer Oberseite des Kopfes (21) des Kolbens untergebracht ist, wobei das Luftanschlagblech (7) einen Biegeabschnitt (71) enthält, wobei
der Biegeabschnitt (71) eine Positionierungszone (72) aufweist, die auf einer ersten Seite davon angeordnet ist und sich auf der Ebene (210) der Oberseite des Kopfes (21) befindet, und der Biegeabschnitt (71) ferner eine Wirkzone (73) aufweist, die auf einer zweiten Seite davon angeordnet ist und so konfiguriert ist, dass sie einen Luftkanal (23) des Kolbens schließt, wobei der Biegeabschnitt (71) eine Grenzlinie der Wirkzone (73) und der Positionierungszone (72) des Luftanschlagblechs (7) ist, so dass eine positive Oberfläche des Luftanschlagblechs (7) einen stumpfen Winkel von weniger als 180 Grad bildet, und eine hintere Oberfläche der Wirkzone (73) des Luftanschlagblechs (7), die die Oberseite des Zylinders (13) unterstützt, relativ zu der Ebene (210) der Oberseite des Kopfes (21) in einem offenen Winkel θ eindreht, wodurch ein Luftströmungsraum (Z) erzeugt wird;
wobei sich eine Kolbenstange (5) von dem Kopf (21) nach unten erstreckt und eine Luftleitung (52) aufweist, die auf einer Oberseite der Kolbenstange (5) definiert ist und mit dem Luftkanal (23) in Verbindung steht, wenn der Kolben des Luftkompressors anhält, wobei sich die Wirkzone (73) der Luftanschlagplatte (7) relativ zu dem Luftkanal (23) und der Luftleitung (52) eindreht,
wobei der Biegeabschnitt (71) des Luftanschlagblechs (7) mindestens eine klappbare Führungslinie aufweist und eine Anzahl der mindestens einen klappbaren Führungslinie (71) auf der Grundlage einer Ausgangsleistung des Luftkompressors (10) bestimmt wird;
**dadurch gekennzeichnet, dass**
der Biegeabschnitt (71) eine erste klappbare Führungslinie (711), eine zweite klappbare Führungslinie (712) und eine dritte klappbare Führungslinie (713) aufweist, so dass beim Anhalten des Kolbens die Wirkzone (73) des Luftanschlagblechs (7) in Bezug auf die Ebene (210) der Oberseite des Kopfes (21) unter dem offenen Winkel θ eindreht, oder
**dadurch gekennzeichnet, dass**
der Biegeabschnitt (93) eine erste klappbare Führungslinie (931) und eine zweite klappbare Führungslinie (932) aufweist, wobei die Wirkzone (92) eine Höhe aufweist, die sich von einer Höhe der Positionierungszone (91) unterscheidet.

2. Luftanschlagblech des Kolbens des Zylinders gemäß Anspruch 1, **dadurch gekennzeichnet, dass** der Kopf (21) die beiden getrennten Bolzen (211), (212) enthält und die Positionierungszone (72) des Luftanschlagblechs (7) zwei beabstandete Öffnungen (721), (722) aufweist, die mit den beiden getrennten Bolzen (211), (212) des Kopfes (21) verbunden sind, wodurch das Luftanschlagblech (7) am Kopf (21) befestigt wird;
wobei, wenn der Kolben des Luftkompressors (10) anhält, die Wirkzone (73) der Luftanschlagplatte (7) in Bezug auf den Luftkanal (23) eindreht.

3. Luftanschlagblech des Kolbens des Zylinders gemäß Anspruch 1, **dadurch gekennzeichnet, dass** die beiden beabstandeten Öffnungen (911), (912) der Positionierungszone (91) durch zwei getrennte Verlängerungen (82), (83) einer Ebene einer Oberseite des Kopfes (81) verlaufen und durch zwei beabstandete kreisförmige Schultern (84), (85) angehalten werden.

## Revendications

1. Une feuille d'arrêt d'air d'un piston d'un cylindre, le piston étant logé dans un compresseur (10), et une feuille d'arrêt d'air (7) étant logée sur un plan (210) d'un sommet de la tête (21) du piston, la feuille d'arrêt d'air (7) comprenant une portion de flexion (71),
la portion de flexion (71) comprend une zone de positionnement (72) agencée sur un premier côté d'elle-même et située sur le plan (210) du sommet de la tête (21), et la portion de flexion (71) comprend en outre une zone d'action (73) agencée sur un deuxième côté d'elle-même-ci et configurée pour fermer un canal d'air (23) du piston, la section de flexion (71) étant une ligne de délimitation de la zone d'action (73) et de la zone de positionnement (72) de la feuille d'arrêt d'air (7) de telle sorte qu'une surface positive de la feuille d'arrêt d'air (7) forme un angle obtus inférieur à 180 degrés, et qu'une surface arrière de la zone d'action (73) de la feuille d'arrêt d'air (7) venant contre le sommet du le cylindre (13) tourne par rapport au plan (210) du sommet de la tête (21) selon un angle ouvert θ, produisant ainsi un espace d'écoulement d'air (Z) ;
une tige de piston (5) s'étend vers le bas depuis la tête (21) et comprend un conduit d'air (52) défini sur le sommet de la tige de piston (5) et communiquant avec le canal d'air (23, la zone d'action (73) de la feuille d'arrêt d'air (7) s'ouvrant par rapport au canal d'air (23) et au conduit d'air (52) lorsque le piston du compresseur d'air s'arrête,
la portion de flexion (71) de la feuille d'arrêt d'air (7) comprenant au moins une ligne de guidage pliable, et un certain nombre de la ou des lignes de guidage pliables (71) est déterminé en fonction d'une puissance de sortie du compresseur d'air (10) ;
**caractérisé en ce que**
la section de flexion (71) comprend une première ligne de guidage pliable (711), une deuxième ligne de guidage pliable (712) et une troisième ligne de guidage pliable (713), de sorte que lorsque le piston s'arrête, la zone d'action (73) de la feuille d'arrêt d'air (7) tourne par rapport au plan (210) du sommet de la tête (21) selon l'angle d'ouverture θ,
ou **caractérisé en ce que**
la section de flexion (93) comprend une première ligne de guidage pliable (931) et une deuxième ligne de guidage pliable (932), la zone d'action (92) ayant une hauteur différente d'une hauteur de la zone de positionnement (91).

2. La feuille d'arrêt d'air du piston du cylindre selon la revendication 1, **caractérisée en ce que** la tête (21) comprend les deux vis séparées (211), (212), et la zone de positionnement (72) de la feuille d'arrêt d'air (7) présente deux orifices espacés (721), (722) reliés aux deux vis séparées (211), (212) de la tête (21), fixant ainsi la feuille d'arrêt d'air (7) sur la tête (21) ;
lorsque le piston du compresseur d'air (10) s'arrête, la zone d'action (73) de la feuille d'arrêt d'air (7) tourne par rapport au canal d'air (23).

3. La feuille d'arrêt d'air du piston du cylindre selon la revendication 1, **caractérisée en ce que** les deux orifices espacés (911), (912) de la zone de positionnement (91) traversent deux extensions séparées (82), (83) d'un plan d'un sommet de la tête (81) et sont arrêtés par deux épaulements circulaires espacés (84), (85).
